# EUROPÄISCHE PATENTSCHRIFT

(11) **EP 1 176 414 B1**
(45) Veröffentlichungstag und Bekanntmachung des Hinweises auf die Patenterteilung: **23.11.2005**
(21) Anmeldenummer: 01117674.0
(22) Anmeldetag: 26.07.2001
(51) Int. Cl.: G01N 15/02

(54) **Verfahren und Vorrichtung zur Bestimmung von physikalischen Kollektivparametern von Partikeln in Gasen**
Process and device for determining of physical collective parameters of particles in gas
Procédé et dispositif pour déterminer des paramètres physiques collectifs des particules dans les gaz

(30) Priorität: 28.07.2000 DE 10036860
(43) Veröffentlichungstag der Anmeldung: 30.01.2002
(73) Patentinhaber: BASF Aktiengesellschaft, 67056 Ludwigshafen (DE)
(72) Erfinder: Sachweh, Bernd, Dr., 67149 Meckenheim (DE); Heffels, Camiel, Dr., 74579 Gernsheim (DE); Rädle, Matthias, Dr., 67273 Weisenheim am Berg (DE); Biermann, Helmut, 67280 Ebertsheim (DE); Eisen, Hans Jürgen, 67071 Ludwigshafen (DE); Ettmüller, Jürgen, 67454 Hassloch (DE); Reuvers, Johannes G.,Dr., 67591 Hohen-Sülzen (DE)
(74) Vertreter: Isenbruck, Günter

(56) Entgegenhaltungen:
- EP-A- 0 992 785
- US-A- 4 497 577
- US-A- 4 541 719
- US-A- 4 693 602

## Beschreibung

Gasströme, beispielsweise Abgasströme aus chemischen Anlagen enthalten oftmals dampfförmige Komponenten an luftfremden Stoffen, die zur Aerosolbildung führen. Obwohl in der Regel die gesetzlich festgelegten Grenzwerte für Schadstoffe eingehalten werden, ist die mit der Aerosolbildung verbundene Rauchfahne zumeist störend. Oftmals ist eine verstärkte Aerosolbildung mit bestimmten genau zuordnenbaren Betriebsstörungen verbunden, die bei genauer Kenntnis der Aerosolmenge noch genauer zuzuordnen wären. Die rein optisch quantifizierte Aerosolmenge in Bezug auf die Intensität der Rauchfahne ist nicht immer absolut bestimmbar und daher problematisch, da Sekundäreffekte, wie etwa die Verdünnung des Aerosols in der Umgebungsluft, die Verdampfung von Tröpfchen Aerosolen oder die Wasserdampfaufnahme von löslichen, hygroskopischen Aerosolen überlagert sind. Damit ist eine Zuordnung von Aerosol zu Betriebszuständen oder Betriebsstörungen schwer vorzunehmen. Die Ableitung von Gegenmaßnahmen im Produktionsbereich ist damit mehr oder weniger dem Zufall überlassen.

Weiterhin führen Aerosole im technischen Prozessen, insbesondere im Anlagenverbund von chemischen Großanlagen oftmals zu Katalysatorschäden, Korrosion und Produktverunreinigungen. Eine gezielte Steuerung der Verfahrensprozesse im Hinblick auf Aerosolvermeidung oder Aerosoleleminierung ist bislang nicht möglich, da eine sichere, robuste und zuverlässige Meßtechnik bisher nicht zur Verfügung steht.

Aus der AT 395270 B ist ein Verfahren und eine Vorrichtung zur absoluten Messung der Anzahlkonzentration kolloidaler Partikel bekannt, bei dem in einer Meßkammer eine Aerosolpartikelprobe durch adiabatische Expansion dampfübersättigt wird, was zu einem gleichmäßigen Anwachsen der betrachteten Aerosolteilchen führt, deren Konzentration anschließend durch Extinktion eines durch die betrachtete Partikelsuspension hindurchtretenden kohärenten Lichtstrahls simultan mit dem unter einem vorbestimmten Winkel gestreuten Lichtfluß als Funktion der Zeit gemessen wird.

Nachteilig an diesem Verfahren ist insbesondere, daß die zu untersuchende Aerosolpartikelprobe vor Untersuchung noch einer adiabatischen Expansion zum Zwecke der Dampfübersättigung unterzogen werden muß, was insbesondere für ein Online-Verfahren nachteilig ist.

Weiterhin ist aus der US 4,529,306 bekannt, geschmolzene Polymere mittels Bestrahlung durch vorzugsweise weißes Licht auf optische Unreinheiten zu überwachen. Dabei wird ein Polymer, insbesondere eine Polymerschmelze kontinuierlich von weißem Licht durchstrahlt, und anschließend mittels eines optischen Detektionsgerätes auf weißes Licht-brechende Teilchen hin untersucht. Nachteilig ist bei diesem Verfahren jedoch, daß eine bildanalytische Auswertung der Meßergebnisse möglich ist, die ausschließlich ab Partikelgrößen >50 Mikrometer anwendbar ist.

US-A 4,693,602 betrifft eine Vorrichtung und ein Verfahren zur Messung von an

Partikeln gestreuter Strahlung und zur Charakterisierung dieser Partikel. Die Vorrichtung umfasst eine Messkammer mit Eintritts- und Austrittsöffnungen für elektromagnetische Strahlung, eine Emissionsquelle und mindestens zwei Detektionseinrichtungen zur Bestimmung der Intensität von an den Partikeln gestreuter Strahlung.

US-A 4,541,719 bezieht sich auf ein Verfahren und eine Vorrichtung zur Charakterisierung eines Ensembles mit Mikropartikeln und zur Überwachung ihrer Reaktion auf Umwelteinflüsse. Dabei wird die an den Partikeln gestreute Strahlungsintensität unter zwei Sets von Streuwinkeln gemessen.

EP-A 0 992 785 hat ein Partikelgrößenverteilungs-Analysegerät zum Gegenstand, in dem Licht in eine Probenmesszone eingestrahlt und in dem unter verschiedenen Streuwinkeln die an der Probe gestreute Lichtintensität detektiert wird. Das Gerät umfasst zwei Lichtquellen.

US-A 4,497,577 bezieht sich auf eine Dampffeuchtigkeits-Messeinrichtung, die eine Lichtquelle, einen Abschnitt, der einen Messraum bildet, wenn die Einrichtung in einen Nassdampfstrom eingesetzt ist, ein Lichtleiterbündel zum Übertragen mehrerer Streulichtstrahlen mit unterschiedlichen Streuwinkeln zu einem Licht-elektrischen Umsetzer umfasst, wobei die Streulichtstrahlen durch Auftreffen des einfallenden Lichtstrahls auf den Messraum erhalten werden.

Aufgabe der vorliegenden Erfindung war daher, die aufgezeigten Nachteile des Standes der Technik zu vermeiden und insbesondere ein Verfahren und eine Vorrichtung zur Verfügung zu stellen, mit der eine objektive Bewertung von Partikeleigenschaften, insbesondere in Gasen möglich ist.

Diese Aufgabe wird durch eine Vorrichtung mit den kennzeichnenden Merkmalen des Anspruches 1, sowie durch ein Verfahren mit den kennzeichnenden Merkmalen des Anspruches 12 gelöst.

Demnach umfaßt eine erfindungsgemäße Vorrichtung eine Meßkammer, vorzugsweise eine Durchflußzelle, mit Eintritts- und Austrittsöffnungen für elektromagnetische Strahlung, wobei eine Emissionsquelle für elektromagnetische Strahlung und zumindest zwei Detektionseinrichtungen zur Bestimmung der Intensität von an den Partikeln gestreuter elektromagnetischer Strahlung vorgesehen sind und wobei die Detektionseinrichtungen gestreute elektromagnetische Strahlung unterschiedlicher Streubereiche erfassen.

Damit kann vorteilhafterweise das sogenannte physikalische "Mehrwinkelstreuprinzip" angewendet werden, wobei durch geeignete Wahl der Detektorpositionen, die unterschiedliche Streubereiche der elektromagnetischen Strahlung umfassen, die Empfindlichkeit der Detektionseinrichtung auf bestimmte Partikelgrößenbereiche angepaßt wird.

Unter dem Begriff Gase sollen im folgenden sowohl ruhende, als auch strömende Gase im Sinne ihrer physikalischen Definition verstanden werden.

Unter physikalischen Kollektivparametern werden im folgenden insbesondere derartige Eigenschaften und Parameter von Partikeln verstanden, die nur am Partikelkollektiv als Mittelwert gemessen werden. Beispiele dafür sind Konzentration, mittlerer Teilchendurchmesser und dergleichen.

Unter Detektionseinrichtung wird verstanden, daß diese Einrichtung zur Erfassung von elektromagnetischer Strahlung und nachfolgender Angabe eines zumindest relativen Wertes der elektromagnetischen Strahlung geeignet ist.

Bevorzugt erfaßt eine erste Detektionseinrichtung gestreute elektromagnetische Strahlung aus dem vorwärts gestreuten Bereich (Vorwärtsstreuung). Weiter bevorzugt ist, daß eine zweite Detektionseinrichtung gestreute elektromagnetische Strahlung aus dem rückwärts gestreuten Bereich (Rückwärtsstreuung) erfaßt. Dies ermöglicht vorteilhafterweise, daß durch geeignete Wahl der Detektorposition in den beiden vorstehend erwähnten Bereichen Aerosole mit Teilchengrößen von im allgemeinen weniger als 10 µm besonders eindeutig detektiert werden können. Dies gilt auch bei gleichzeitigem Vorliegen von Partikeln mit Partikelgrößen von mehr als 10 µm in diesen Gasen.

In einer besonders bevorzugten Ausführungsform umfaßt der vorwärts gestreute Bereich einen Vorwärtsstreuwinkel von 20 bis 80° und der rückwärts gestreute Bereich einen Rückwärtsstreuwinkel von 100 bis 160°, wodurch die Empfindlichkeit für Aerosole mit einer Partikelgröße von weniger als 10 µm, insbesondere weniger als 5 µm, besonders bevorzugt erfaßt werden kann.

Weiter bevorzugt ist, daß Mittel zur Bestimmung des Verhältnisses der Streuintensitäten der Vorwärts- und Rückwärtsstreuung vorgesehen sind. Dies ermöglicht durch einfaches In-Relation-Setzen beider Werte die Ermittlung der mittleren Partikelgröße der Aerosolpartikel. Damit können vorzugsweise mittlere Partikelgrößen bis zu 0,1 µm erfaßt werden. Partikel mit Größen oberhalb 10 µm stören dabei nicht.

Ferner sind Mittel zur mehrstufigen Spülung der Emissionsquelle und/oder Detektionseinrichtungen für elektromagnetische Strahlung mit einem unterschiedlichen Fluid in jeder Spülstufe vorgesehen. Eine Spülung mit einem Fluid verhindert, daß eine Ablagerung von Feinstpartikeln auf der Optik nach kurzer Betriebszeit zu falschen Meßwerten führt.

Durch Mittel für eine mehrstufige oder kontinuierliche Spülung wird gewährleistet, daß auch nach einer einmaligen Spülung noch vorhandene abgelagerte Feinstpartikel in einfacher Weise von der Optik der Emissionsquelle elektromagnetischer Strahlung und/oder Detektionseinrichtungen entfernt oder die Ablagerungen verhindert werden.

Ferner ist vorgesehen, daß unterschiedliche Fluide für jede Spülstufe vorgesehen sind. Damit ist beispielsweise bevorzugt möglich, daß eine erste Spülung mit Luft erfolgt und nicht entfernte Feinstpartikel daraufhin in einer zweiten Spülung mit einer Flüssigkeit, beispielsweise Wasser gespült werden, die trocken nicht mehr entfernbar sind. Bei der dritten Spülstufe wird wieder mit Luft gespült, so daß die optische Einrichtung nach der Flüssigkeitsspülung bevorzugt durch die Spülleitung trocken geblasen wird, wodurch Fehlmessung durch Ablagerung von Tropfen der Spülflüssigkeit auf der Optik ausgeschlossen sind.

In einer weiteren bevorzugten Ausführungsform ist eine dritte Detektionseinrichtung vorgesehen, die beispielsweise Strahlung eines mittleren Streuwinkels von 0° erfaßt.

Damit können neben der einfachen, vorstehend geschilderten, Erfassung von Aerosolpartikeln von ≤ 10 µm gleichzeitig größere Partikel im Gas, die eine Größe von mehr als 10 µm aufweisen, beispielsweise Tropfen und Staub, gemessen werden. Weiterhin ermöglicht diese Meßvorrichtung eine genaue Differenzierung zwischen Fein- und Grobteilchen in einem Gas und deren simultane Erfassung.

Bevorzugt emittiert die Emissionsquelle für elektromagnetische Strahlung Wellenlängen im Bereich des weißen sichtbaren Lichtes, wobei insbesondere Mehrdeutigkeiten bei der Ermittlung der Partikelgröße vermieden werden.

In einer weiteren bevorzugten Ausführungsform sind Mittel zur Begrenzung des optisch definierten Meßvolumens vorgesehen, was durch eine höhere Strahlungsintensität im Meßvolumen die unteren Nachweisgrenzen bezüglich der Partikelgröße und/oder -konzentration absenkt.

Die vorstehend genannte Aufgabe der vorliegenden Erfindung wird weiterhin durch ein erfindungsgemäßes Verfahren nach dem Oberbegriff von Anspruch 12 gelöst.

Demnach ist vorgesehen, daß die Intensität der gestreuten Strahlung mindestens zweier unterschiedlicher Streubereiche bestimmt und anschließend in Relation zueinander gesetzt wird.

Dies ermöglicht vorteilhafterweise die einfache Bestimmung der Partikelgröße von Teilchen, insbesondere im Bereich von ≤ 10 µm.

In einer vorteilhaften Ausführungsform umfaßt ein Streubereich den vorwärts gestreuten Bereich und der andere Streubereich den rückwärts gestreuten Bereich. Es ist weiter bevorzugt, daß der Vorwärtsstreuwinkel 20 bis 80° und der Rückwärtsstreuwinkel 100 bis 160° umfaßt, da damit vorteilhafterweise die Empfindlichkeit der Detektionseinrichtung auf bestimmte Partikelgrößenbereiche von weniger als 10 µm eingestellt werden kann.

Bevorzugt wird bei dem erfindungsgemäßen Verfahren die Intensität der gestreuten Strahlung in einem dritten Streubereich, insbesondere bevorzugt bei einem mittleren Streuwinkel von 0° gemessen. Damit stellt das erfindungsgemäße Verfahren in einfacher Weise die Bestimmung von Partikelgrößen innerhalb des gesamten Partikelgrößenbereiches in Gasen zur Verfügung, so daß damit Aerosole und auch grobe Teilchen in einem Gas in einfacher Weise gleichzeitig vermessen und analysiert werden können.

Bevorzugt ist, daß die elektromagnetische Strahlung Wellenlängen im Bereich des weißen sichtbaren Lichtes umfaßt, da dabei Mehrdeutigkeiten bei der Ermittlung der Partikelgröße in einfacher Weise vermieden werden können.

Bevorzugt findet das erfindungsgemäße Verfahren Verwendung zur Bestimmung von physikalischen Eigenschaften von Aerosolen in Gasen, die zusätzlich Partikel enthalten, die Partikelgrößen von mehr als 10 µm aufweisen.

Weitere Vorteile und Ausgestaltungen ergeben sich aus der Beschreibung und den beiliegenden Zeichnungen.

Es versteht sich, daß die vorstehend genannten und nachstehend noch zu erläuternden Merkmale nicht nur in der jeweils angegebenen Kombination, sondern auch in anderen Kombinationen oder Alleinstellung verwendbar sind, ohne den Rahmen der vorliegenden Erfindung zu verlassen.

Die Erfindung ist anhand zweier Ausführungsbeispiele in den Zeichnungen schematisch dargestellt und wird im folgenden unter Bezugnahme auf die Zeichnungen ausführlich beschrieben.
Figur 1 zeigt eine Ausführungsform einer erfindungsgemäßen Vorrichtung;
Figur 2 zeigt eine weitere Ausführungsform einer erfindungsgemäßen Vorrichtung;
Figur 3 zeigt das Intensitätsverhältnis der gestreuten elektromagnetischen Strahlung in Abhängigkeit der Partikelgröße für verschiedene Anordnungen der Detektionseinrichtung in den jeweiligen Streubereichen.

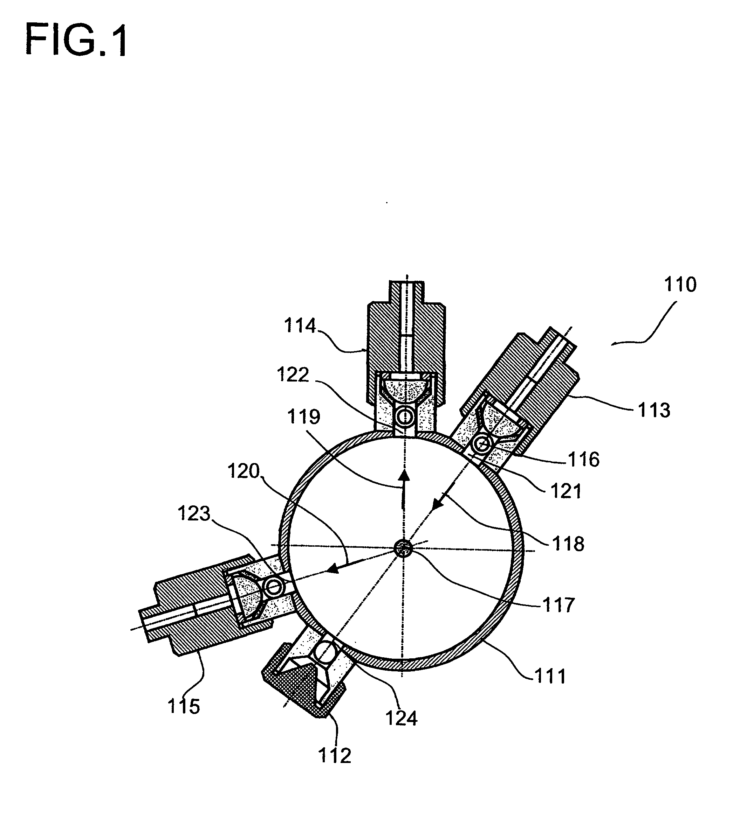

In Fig. 1 ist ein schematischer Querschnitt durch eine erfindungsgemäße Vorrichtung (110) dargestellt. Diese besteht demnach aus einer an sich bekannten Meßkammer (111), an der Öffnungen (121, 122, 123 und 124) vorgesehen sind, die den Eintritt bzw. Austritt von elektromagnetischer Strahlung ermöglichen. Eine weitere nicht dargestellte Öffnung ist im vorliegenden Ausführungsbeispiel verschlossen und für elektromagnetische Strahlung nicht durchdringbar.

Eine dem Fachmann an sich bekannte Quelle für elektromagnetische Strahlung, im folgenden als Strahlungsquelle (113) bezeichnet, ist an einer ersten Öffnung (121) angebracht. Die Strahlungsquelle (113) kann dabei vorzugsweise weißes Licht im sichtbaren Bereich emittieren, jedoch sind andere Wellenlängen, wie beispielsweise im Laser, LED, NIR, UV-Bereich und dergleichen ebenso denkbar. Die typische Kantenlänge des optisch definierten Meßvolumens in der Strömung sollte aus anwendungstechnischen Gründen 10 mm nicht überschreiten. Dies wird durch den Einbau einer geeigneten fokussierenden Optik in die Strahlungsquelle (113) und/oder in die Detektoren erreicht. Auf der gegenüberliegenden Seite der Meßkammer in Bezug auf die Strahlungsquelle (113) ist eine Lichtfalle (112) an einer zweiten Öffnung (124) angebracht, welche das austretende Licht absorbiert und ableitet.

Benachbart zu der Strahlungsquelle (113) ist eine erste Detektionseinrichtung (114) zur Detektion des rückwärts gestreuten Lichtes angebracht. Diese ist an der Öffnung (122) angeordnet. Bevorzugt beträgt der Rückwärtsstreuwinkel zwischen 100 und 160°, vorzugsweise 110 und 150°. Der optimale Winkelbereich wird durch eine den Gegebenheiten jeweils angepaßte Anordnung der Detektionseinrichtung (114) erzielt und hängt auch von dem jeweils zu bestimmenden Aerosol ab. Im Bereich des vorwärts gestreuten Lichtes ist an einer dritten Öffnung (123) eine zweite Detektionseinrichtung (115) zur Bestimmung des vorwärts gestreuten Lichtes angeordnet. Der Vorwärtsstreuwinkel beträgt dabei zwischen 20 und 80° vorzugsweise zwischen 30 und 70°. Diese beiden Detektionseinrichtungen (114 und 115) ermöglichen dabei vorteilhafterweise die Anwendung des sogenannten Mehrwinkelstreuprinzips, bei dem Streulicht von Partikelkollektiven aus dem Vorwärts- und Rückwärtsstreubereich detektiert werden kann. Durch die genaue Einstellung der Position beider Detektionseinrichtungen (114 und 115) kann die zu bestimmende Partikelgröße genau eingestellt werden. Im Gasstrom enthaltene grobe Partikel und Partikelgrößen von größer als 10 µm, beispielsweise Tropfen und Staub, beeinflussen bei dieser Anordnung der Streuwinkel das Meßergebnis nicht relevant.

An der Strahlungsquelle (113) ist weiterhin eine Spülungseinrichtung (116) zur Spülung der optischen Apparatur (Optik) der Strahlungsquelle (113) und/oder Detektoren (114, 115) mit Druckluft oder einer Flüssigkeit angeordnet. Eben- so wird durch geeignete Verschaltung erreicht; daß die üblicherweise verwendete Luftspülung durch mehrstufige Spülung mit Luft, Flüssigkeit und Druckluft über die Spülungsleitungen ersetzt werden kann, wobei die Optik nach der Flüssigkeitsspülung aufgrund der nachfolgenden Spülung mit Luft trocken geblasen werden kann, womit Fehlmessungen durch Ablagerung von Tropfen der Spülflüssigkeit auf der Optik ausgeschlossen sind. Jedoch ist es ebenso möglich, die Optik der Strahlungsquelle (113) mit Luft oder mit Flüssigkeit in Kombination mit einem anderen Fluid in einer mehrstufigen Spülvariante zu spülen.

In der Meßkammer (111) ist in Fig. 1 schematisch ein Partikel (117) gezeigt. Selbstverständlich sind in einer erfindungsgemäßen Vorrichtung mehrere Partikel in einem Gas vorhanden; darauf wird jedoch im Hinblick auf eine Vereinfachung des Prinzips in Fig. 1 verzichtet.

Die Strahlungsquelle (113) sendet elektromagnetische Strahlung, bevorzugt im sichtbaren Bereich des Lichtes aus, welche durch den Pfeil (118) dargestellt ist. Diese Strahlung wird an dem Partikel (117) gestreut. Die Streuung im Bereich des rückwärts gestreuten Lichtes ist durch den Pfeil (119) dargestellt, welcher durch die erste Detektionseinrichtung (114) erfaßt wird. Die gestreute Strahlung im Bereich des vorwärts gestreuten Lichtes ist durch den Pfeil (120) dargestellt und wird von der zweiten Detektionseinrichtung (115) erfaßt. In Fig. 1 nicht dargestellte Mittel zur In-Relation-Setzen der Streulichtintensitäten in Vorwärts- und Rückwärtsstreuung ermöglichen die Bestimmung der mittleren Partikelgröße der Aerosolpartikel. Die absolute Höhe der Streulichtintensität, welche entweder in Vorwärts- oder Rückwärtsstreuung oder jedoch auch in einer Kombination aus beiden gemessen werden kann, insbesondere bevorzugt in Vorwärtsrichtung, wird zur Bestimmung der Anzahlkonzentration verwendet. Die untere Grenze für die Partikelgröße liegt bei 0,1 µm, die minimal meßbare Massenkonzentration beträgt etwa 0,1 mg/m³.

Bevorzugt werden zur Erfassung des gestreuten Lichtes in den Detektionseinrichtungen (114 und 115) und/oder der Strahlungsquelle (113) faseroptische Sensoren eingesetzt, die in explosionsgefährdeten Bereichen sowie in Gegenwart von elektromagnetischen Feldern eingesetzt werden können.

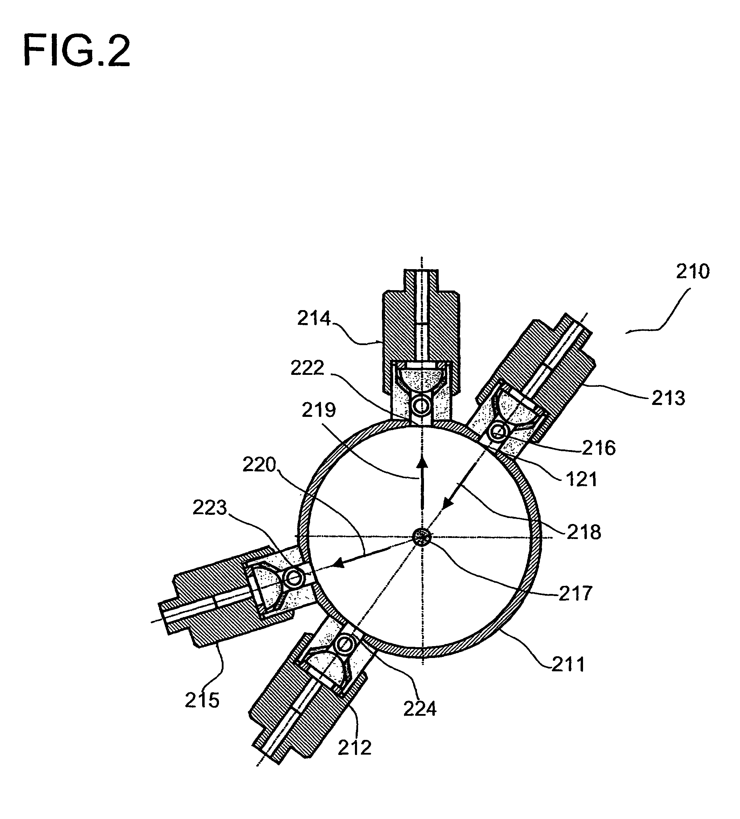

In Figur 2 ist eine weitere Ausführungsform der erfindungsgemäßen Vorrichtung dargestellt. Die erfindungsgemäße Vorrichtung (210) in Figur 2 ist im wesentlichen analog zu der Vorrichtung in Figur 1 aufgebaut. In einer Meßkammer (211) befindet sich zur exemplarischen Verdeutlichung des erfindungsgemäßen Meßprinzips ein Partikel (217). An der Meßkammer (211) sind des Weiteren Öffnungen (221, 222, 223 und 224) zum Eintritt und Austritt elektromagnetischer Strahlung angebracht.

An der Öffnung (221) ist eine Strahlungsquelle (213) mit einer in Figur 1 erläuterten Spülungseinrichtung (216) angeordnet. Benachbart zur Quelle (213) ist eine erste Detektionseinrichtung (214) an der Öffnung (222) zur Detektion der rückwärts gestreuten Strahlung, dargestellt durch Pfeil (219), angeordnet.

Im Bereich der vorwärts gestreuten Strahlung ist an der Öffnung (223) eine zweite Detektionseinrichtung (215) zur Detektion des vorwärtsgestreuten Lichtes, dargestellt durch den Pfeil (220) angebracht. Gegenüber der Strahlungsquelle (213), die elektromagnetische Strahlung, dargestellt durch den Pfeil (218), aussendet, ist eine zweite Detektionseinrichtung (212) an der Öffnung (224) angeordnet, die abgeschwächtes Licht erfaßt, das mit einem mittleren Streuwinkel von 0° auf die dritte Detektionseinrichtung (212) trifft. Dies ist eine Variante der Extinktionsmessung, wobei die Lichtschwächung durch alle im Gasstrom vorhandenen Partikel gemessen wird. Diese Meßmethode ist auch als photometrische Meßtechnik bekannt, und ist jedoch nur im Größenbereich von mittleren Partikelgrößen oberhalb 10 µm verwendbar. Mit der in Figur 2 dargestellten Vorrichtung (210) können damit Partikel im Bereich von weniger als 10 µm, sogenannte Aerosole, und auch Partikel mit mittleren Partikelgrößen von mehr als 10 µm, die im sogenannten Grobstaubbereich liegen, beispielsweise Tropfen und Stäube, vermessen werden. Die Vorrichtung in Figur 2 ermöglicht somit eine simultane Vermessung sämtlicher in einem Gas vorkommender Partikelgrößen.

Auch in Figur 2 gelten die unter Figur 1 dargelegten Grundsätze für die Detektionseinrichtung bzw. für das optisch definierte Meßvolumen. Ebenso erfolgt die Spülung der Strahlungsquelle (213) und/oder der Detektionseinrichtungen (214, 215, 212) mittels der Spülungsvorrichtung (216) nach den unter Figur 1 erläuternden Grundsätzen.

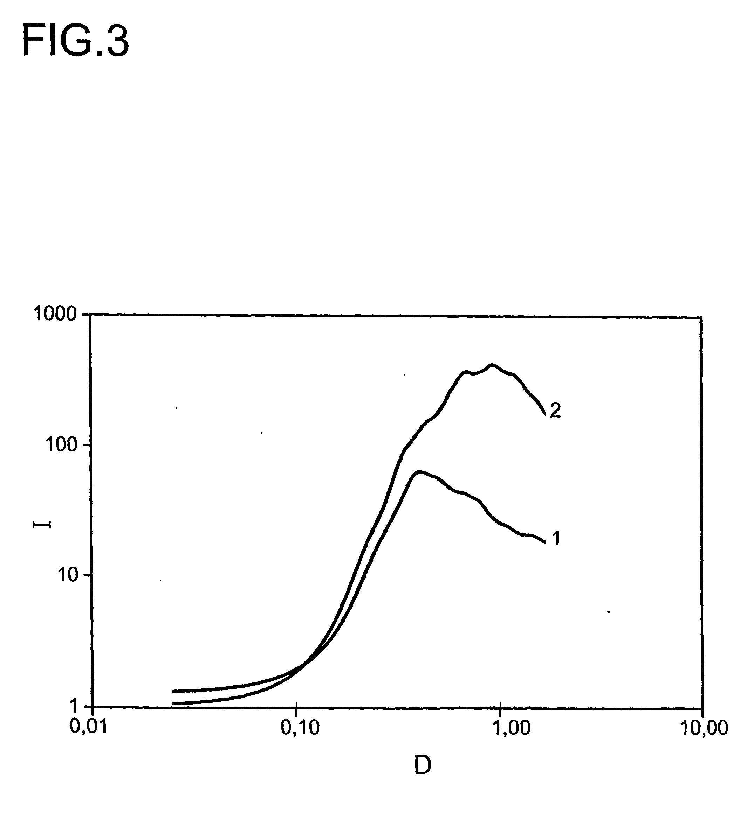

Figur 3 zeigt das Intensitätsverhältnis (I) des vorwärts und rückwärts gestreuten Lichtes in Abhängigkeit von der Partikelgröße in µm (D) in Abhängigkeit von den Winkelbereichen für den Vorwärts- und Rückwärtsstreuwinkel.

Kurve 1 zeigt das Intensitätsverhältnis von einem Vorwärtsstreuwinkel von 40° und einem Rückwärtsstreuwinkel von 120° auf. Wie ersichtlich, können auf dem abfallenden Ast der Kurve 1 insbesondere Partikel mit Durchmessern im Bereich von 0,4 bis 5 µm besonders genau vermessen werden, wenn keine Partikel mit einem Durchmesser von weniger als 0,4 µm vorhanden sind.

Kurve 2 weist das Intensitätsverhältnis von einem Vorwärtsstreuwinkel von 20° und einem Rückwärtsstreuwinkel von 160° auf. Hiermit sind insbesondere Partikelgrößen von 0,1 bis 1 µm bestimmbar.

Wie aus Figur 3 hervorgeht, sind insbesondere die den Kurven 1 und 2 zugrunde liegenden Anordnungen für die räumliche Anordnung der Detektionseinrichtung für vorwärts und rückwärts gestreute Strahlung zur Vermessung von Aerosolen, die gerade einen besonders kleinen Partikelbereich von insbesondere < 5 µm, vorzugsweise von 0,1 bis 5 µm aufweisen, geeignet. Gerade in diesem Größenbereich liegen nahezu sämtliche technisch relevanten Aerosole, die insbesondere beim Betrieb beispielsweise im Abgas von chemischen Anlagen auftreten können.

Verwendung findet eine erfindungsgemäße Vorrichtung und das erfindungsgemäße Verfahren beispielsweise im Bereich von chemischen Verbundanlagen, wo eine erfolgreiche Reduzierung der Aerosole, beispielsweise im Bereich der Düngemittelproduktion ermöglicht ist. Weitere Einsatzmöglichkeiten sind beispielsweise die kontinuierliche Überwachung von Rauchgasen, die Detektion von Nebelkeimen in Kreisgasprozessen oder die Überwachung von Filterschläuchen.

Ferner betrifft die Erfindung ein Computerprogramm mit Programmcode-Mitteln zur Durchführung des erfindungsgemäßen Verfahrens bzw. zur Durchführung mit Hilfe der erfindungsgemäßen Vorrichtung, sowie entsprechende Datenträger mit diesen Computerprogrammen.

## Patentansprüche

1. Vorrichtung zur Bestimmung von physikalischen Kollektivparametern von Partikeln in Gasen, die eine Meßkammer mit Eintritts- (121) und Austrittsöffnungen (122, 123, 124) für elektromagnetische Strahlung umfaßt, wobei eine Emissionsquelle (113) für elektromagnetische Strahlung und zumindest zwei Detektionseinrichtungen (114, 115) zur Bestimmung der Intensität von an den Partikeln gestreuter elektromagnetischer Strahlung vorgesehen sind und wobei die Detektionseinrichtungen (114, 115) gestreute elektromagnetische Strahlung unterschiedlicher Streuwinkelbereiche erfassen, **dadurch gekennzeichnet, dass** Mittel (116) zur mehrstufigen Spülung der Emissionsquelle (113) mit einem unterschiedlichen Fluid in jeder Spülstufe vorgesehen sind.

2. Vorrichtung nach Anspruch 1, **dadurch gekennzeichnet, daß** eine erste Detektionseinrichtung (115) gestreute elektromagnetische Strahlung aus dem vorwärts gestreuten Bereich erfaßt.

3. Vorrichtung nach Anspruch 2, **dadurch gekennzeichnet, daß** der vorwärts gestreute Bereich einen Vorwärtsstreuwinkel im Bereich von 20° bis 80° umfaßt.

4. Vorrichtung nach einem der vorhergehenden Ansprüche, **dadurch gekennzeichnet, daß** eine zweite Detektionseinrichtung (114) gestreute elektromagnetische Strahlung aus dem rückwärts gestreuten Bereich erfaßt.

5. Vorrichtung nach Anspruch 4, **dadurch gekennzeichnet, daß** der rückwärts gestreute Bereich einen Rückwärtsstreuwinkel im Bereich von 100° bis 160° umfaßt.

6. Vorrichtung nach einem der vorhergehenden Ansprüche, **dadurch gekennzeichnet, daß** Mittel zur Bestimmung des Verhältnisses der Streuintensitäten der Vorwärts- und Rückwärtsstreuung vorgesehen sind.

7. Vorrichtung nach einem der vorhergehenden Ansprüche, **dadurch gekennzeichnet, daß** Mittel zur Spülung der Detektionseinrichtungen (114, 115) für elektromagnetische Strahlung mit einem unterschiedlichen Fluid in jeder Spülstufe vorgesehen sind.

8. Vorrichtung nach einem der vorhergehenden Ansprüche, **dadurch gekennzeichnet, daß** eine dritte Detektionseinrichtung (212) vorgesehen ist.

9. Vorrichtung nach Anspruch 9, **dadurch gekennzeichnet, daß** die dritte Detektionseinrichtung (212) Strahlung eines mittleren Streuwinkels von 0° erfaßt.

10. Vorrichtung nach einem der vorhergehenden Ansprüche, **dadurch gekennzeichnet, daß** die Emissionsquelle für elektromagnetische Strahlung (113) Wellenlängen im Bereich des sichtbaren Lichtes emittiert.

11. Vorrichtung nach einem der vorhergehenden Ansprüche, **dadurch gekennzeichnet, daß** Mittel zur Begrenzung des optisch definierten Meßvolumens vorgesehen sind.

12. Verfahren zur Bestimmung von physikalischen Kollektivparametern von Partikeln in Abgasströmen aus chemischen Anlagen, wobei die Partikel elektromagnetischer Strahlung ausgesetzt werden, die von einer Emissionsquelle emittiert wird und die an den Partikeln gestreut wird, wobei die Intensität der gestreuten Strahlung mindestens zweier unterschiedlicher Streuwinkelbereiche bestimmt und anschließend in Relation zueinander gesetzt wird, **dadurch ge** **kennzeichnet, dass** die Emissionsquelle mehrstufig mit einem unterschiedlichen Fluid in jeder Spülstufe gespült wird.

13. Verfahren nach Anspruch 12, **dadurch gekennzeichnet, daß** ein Streuwinkelbereich den vorwärts gestreuten Bereich und der andere Streuwinkelbereich den rückwärts gestreuten Bereich umfaßt.

14. Verfahren nach Anspruch 13, **dadurch gekennzeichnet, daß** der vorwärts gestreute Bereich einen Vorwärtsstreuwinkel von 20° bis 80° und der rückwärts gestreute Bereich einen Rückstreuwinkel von 100° bis 160° umfaßt.

15. Verfahren nach einem der Ansprüche 12 bis 14, **dadurch gekennzeichnet, daß** die Intensität der gestreuten Strahlung eines dritten Streubereiches gemessen wird.

16. Verfahren nach Anspruch 15, **dadurch gekennzeichnet, daß** der dritte Streubereich einen mittleren Streuwinkel von 0° aufweist.

17. Verfahren nach einer der Ansprüche 12 bis 16, wobei die elektromagnetische Strahlung Wellenlängen im Bereich des sichtbaren Lichtes umfaßt.

18. Verwendung des Verfahrens nach einem der Ansprüche 12 bis 17 zur Bestimmung von Aerosolen in Gasen, die Partikel enthalten, die mittlere Partikelgrößen von mehr als 10 µm aufweisen.

19. Computerprogramm mit Programmcode-Mitteln zur Durchführung des Verfahrens gemäß einem der Ansprüche 12 bis 17.

20. Computerprogramm gemäß Anspruch 19 zur Durchführung mit Hilfe der Vorrichtung gemäß einem der Ansprüche 1 bis 11.

## Claims

1. An apparatus for determining physical collective parameters of particles in gases, which comprises a measuring chamber with entrance ports (121) and exit ports (122, 123, 124) for electromagnetic radiation, an emission source (113) for electromagnetic radiation being provided and at least two detection apparatuses (114, 115) for determining the intensity of electromagnetic radiation scattered at the particles being provided, and the detection apparatuses (114, 115) detecting scattered electromagnetic radiation of different scattering regions, wherein means (116) for multistage purging of the emission source (113) with a different fluid in each purging stage are provided.

2. The apparatus according to claim 1, wherein a first detection apparatus (115) detects scattered electromagnetic radiation from the forwardly scattered region.

3. The apparatus according to claim 2, wherein the forwardly scattered region comprises a forward scattering angle from 20° to 80°.

4. The apparatus according to one of the preceding claims, wherein a second detection apparatus (114) detects scattered electromagnetic radiation from the backwardly scattered region.

5. The apparatus according to claim 4, wherein the backwardly scattered region comprises a backscattering angle from 100° to 160°.

6. The apparatus according to one of the preceding claims, wherein means are provided for determining the ratio of the scattering intensities of the forward scattering and backscattering.

7. The apparatus according to one of the preceding claims, wherein means for purging the detection apparatuses (114, 115) for electromagnetic radiation with a different fluid in each purging stage are provided.

8. The apparatus according to one of the preceding claims, wherein a third detection apparatus (212) is provided.

9. The apparatus according to claim 8, wherein the third detection apparatus (212) detects radiation with a mean scattering angle of 0°.

10. The apparatus according to one of the preceding claims, wherein the emission source for electromagnetic radiation (113) emits wavelengths in the region of visible light.

11. The apparatus according to one of the preceding claims, wherein means are provided for limiting the optically defined measurement volume.

12. A method for determining physical collective parameters of particles in waste gas streams from chemical plants, the particles being exposed to electromagnetic radiation which is emitted from an emission source and is scattered at the particles, and the intensities of the scattered radiation of at least two different scattering regions being determined and brought into a relationship with one another, wherein the emission source is purged in a plurality of stages with a different fluid in each purging stage.

13. The method according to claim 2, wherein one scattering region comprises the forwardly scattered region, and the other scattering region comprises the backscattered region.

14. The method according to claim 3, wherein the forwardly scattered region comprises a forward scattering angle from 20° to 80°, and the backscattered region comprises a backscattering angle from 100° to 160°.

15. The method according to one of claims 2 to 4, wherein the intensity of the scattered radiation in a third scattering region is measured.

16. The method according to claim 5, wherein the third scattering region has a mean scattering angle of 0°.

17. The method according to one of claims 2 to 6, the electromagnetic radiation comprising wavelengths in the region of visible light.

18. The use of the method according to one of claims 2 to 7 for determining aerosols in gases which comprise particles which have mean particle sizes of more than 10 µm.

19. A computer program with program coding means for carrying out the method in accordance with one of claims 12 to 17.

20. The computer program according to claim 19 for running with the aid of the apparatus in accordance with one of claims 1 to 11.

## Revendications

1. Dispositif de détermination de paramètres collectifs physiques de particules dans des gaz, qui comprend une chambre de mesure avec des ouvertures d'entrée (121) et de sortie (122, 123, 124) pour un rayonnement électromagnétique, une source d'émission (113) de rayonnement électromagnétique et au moins deux dispositifs de détection (114, 115) destinés à déterminer l'intensité d'un rayonnement électromagnétique dispersé sur les particules étant prévus, les dispositifs de détection (114, 115) détectant un rayonnement électromagnétique dispersé de zones d'angle de dispersion différentes, **caractérisé en ce que** des moyens (116) sont prévus pour rincer en plusieurs étapes la source d'émission (113) avec un fluide différent à chaque étape de rinçage.

2. Dispositif suivant la revendication 1, **caractérisé en ce qu'**un premier dispositif de détection (115) détecte un rayonnement électromagnétique dispersé provenant de la zone dispersée vers l'avant.

3. Dispositif suivant la revendication 2, **caractérisé en ce que** la zone dispersée vers l'avant présente un angle de dispersion vers l'avant de l'ordre de 20° à 80°.

4. Dispositif suivant l'une des revendications précédentes, **caractérisé en ce qu'**un deuxième dispositif de détection (114) détecte un rayonnement électromagnétique dispersé provenant de la zone dispersée vers l'arrière.

5. Dispositif suivant la revendication 4, **caractérisé en ce que** la zone dispersée vers l'arrière présente un angle de dispersion vers l'arrière de l'ordre de 100° à 160°.

6. Dispositif suivant l'une des revendications précédentes, **caractérisé en ce que** des moyens sont prévus pour déterminer le rapport entre les intensités de la dispersion vers l'avant et de la dispersion vers l'arrière.

7. Dispositif suivant l'une des revendications précédentes, **caractérisé en ce que** des moyens sont prévus pour rincer les dispositifs de détection (114, 115) de rayonnement électromagnétique avec un fluide différent à chaque étape de rinçage.

8. Dispositif suivant l'une des revendications précédentes, **caractérisé en ce qu'**un troisième dispositif de détection (212) est prévu.

9. Dispositif suivant la revendication 8, **caractérisé en ce que** le troisième dispositif de détection (212) détecte un rayonnement d'un angle de dispersion moyen de 0°.

10. Dispositif suivant l'une des revendications précédentes, **caractérisé en ce que** la source d'émission du rayonnement électromagnétique (113) émet des longueurs d'onde dans la gamme de la lumière visible.

11. Dispositif suivant l'une des revendications précédentes, **caractérisé en ce que** des moyens sont prévus pour limiter le volume de mesure optiquement défini.

12. Procédé de détermination de paramètres collectifs physiques de particules dans des courants de gaz résiduaire issus d'installations chimiques, dans lequel les particules sont exposées à un rayonnement électromagnétique qui est émis par une source d'émission et est dispersé sur les particules, l'intensité du rayonnement dispersé d'au moins deux zones d'angle de dispersion différentes étant déterminée et ensuite mise en relation réciproque, **caractérisé en ce que** la source d'émission est rincée en plusieurs étapes avec un fluide différent à chaque étape de rinçage.

13. Procédé suivant la revendication 12, **caractérisé en ce qu'**une zone d'angle de dispersion comprend la zone dispersée vers l'avant et l'autre zone d'angle de dispersion la zone dispersée vers l'arrière.

14. Procédé suivant la revendication 13, **caractérisé en ce que** la zone dispersée vers l'avant comporte un angle de dispersion vers l'avant de 20° à 80° et la zone dispersée vers l'arrière un angle de dispersion vers l'arrière de 100° à 160°.

15. Procédé suivant l'une des revendications 12 à 14, **caractérisé en ce que** l'intensité du rayonnement dispersé d'une troisième zone de dispersion est mesurée.

16. Procédé suivant la revendication 15, **caractérisé en ce que** la troisième zone de dispersion présente un angle de dispersion moyen de 0°.

17. Procédé suivant l'une des revendications 12 à 16, dans lequel le rayonnement électromagnétique comporte des longueurs d'onde dans la gamme de la lumière visible.

18. Utilisation du procédé suivant l'une des revendications 12 à 17, pour la détermination d'aérosols dans des gaz qui contiennent des particules qui présentent des tailles de particule moyennes supérieures à 10 µm.

19. Programme d'ordinateur avec des moyens de code de programme pour réaliser le procédé suivant l'une des revendications 12 à 17.

20. Programme d'ordinateur suivant la revendication 19 à mettre en oeuvre à l'aide du dispositif suivant l'une des revendications 1 à 11.
